(19) **Europäisches Patentamt**

**European Patent Office**

**Office européen des brevets**

(11) **EP 0 581 971 B1**

(12) **EUROPEAN PATENT SPECIFICATION**

(45) Date of publication and mention
of the grant of the patent:
**25.08.1999 Bulletin 1999/34**

(21) Application number: **93904352.7**

(22) Date of filing: **25.02.1993**

(51) Int Cl.⁶: **H04N 1/403**

(86) International application number:
**PCT/JP93/00236**

(87) International publication number:
**WO 93/17518 (02.09.1993 Gazette 1993/21)**

(54) **IMAGE SCANNER**

**BILDABTASTANORDNUNG**

**NUMERISEUR D'IMAGE**

(84) Designated Contracting States:
**DE FR GB**

(30) Priority: **25.02.1992 JP 3783592**
**13.05.1992 JP 12082692**

(43) Date of publication of application:
**09.02.1994 Bulletin 1994/06**

(60) Divisional application: **98111727.8 / 0 869 662**

(73) Proprietors:
• **PFU LIMITED**
**Kahoku-gun Ishikawa 929-11 (JP)**
• **FUJITSU LIMITED**
**Kawasaki-shi, Kanagawa 211 (JP)**

(72) Inventors:
• **KAJI, Yukio**
**Kanazawa-shi, Ishikawa 920-01 (JP)**
• **NAKAJIMA, Toshiki**
**Hakui-gun, Ishikawa 929-14 (JP)**

(74) Representative: **Stebbing, Timothy Charles**
**Haseltine Lake & Co.,**
**Imperial House,**
**15-19 Kingsway**
**London WC2B 6UD (GB)**

(56) References cited:
EP-A- 0 070 161          WO-A-90/04900
DE-A- 3 726 696          JP-A- 1 146 464
JP-A- 2 218 270          JP-A- 63 059 272
US-A- 4 709 274          US-A- 5 065 257
US-A- 5 151 796

## Description

The present invention relates to an image scanner for reading characters and images recorded on an original, and particularly, to a white level setting system for an image scanner, for setting a required white level with a delay of a scan line when detecting the gray level of an image recorded on an original.

An image scanner raster-scans characters and images recorded on an original and converts the scanned data into electric signals to be read.

The image scanner successively traces the gray levels of the ground color of the original, prepares a required white level according to the gray levels, and generates an analog white level signal representing the white level. The image scanner scans the original, provides analog image signals representing the scanned original, determines the gray level (between 0 and 1) of each of the analog image signals according to the analog white level signal serving as a white level of 1, and provides digital image signals representing the gray levels. The gray levels represented with the digital image signals are examined to determine whether or not the original contains recorded images as well as the concentration of the images.

The characters and images recorded on the original and read by the image scanner may be read into a computer. In this case, the gray levels of pixels read by CCD sensors of the image scanner are compared with a predetermined slice level, to binarize the read data into white and black parts. For this binarization, it is important to optimize the slice level to be compared with gray levels.

An embodiment of the present invention may provide a white level setting system for an image scanner, which accurately and quickly determines a white level according to a change in the gray level of the ground color of an original, to accurately read characters and images recorded on the original, helps reduce a ground color area at the leading end of the original, and relaxes limits on originals to be read.

A white level setting system according to the present invention for an image scanner for scanning and reading characters and images recorded on an original has:

an analog-to-digital converter for receiving a first analog image signal obtained by scanning a predetermined white reference, or a second analog image signal obtained by scanning the original, and an analog white level signal representing a presently required white level, and providing a digital image signal representing the gray level of the first or second analog image signal according to the analog white level signal serving as a white level of 1;
a level data memory for providing a digital white level signal representing a required white level in response to a new white level instructing digital signal;

a digital-to-analog converter for converting the digital white level signal representing the required white level provided by the level data memory into an analog white level signal representing the required white level; and
a calculation circuit for receiving the digital image signal from the analog-to-digital converter and the digital white level signal from the level data memory, and if there is a difference between the white levels represented with these signals, carrying out a calculation to adjust the white levels represented by these signals in relation to each other, and providing the level data memory with a new white level instructing digital signal according to the calculation. This arrangement easily prepares a white level according to a change in the gray level of the ground color of the original.

When the digital image signal represents a white level of "v" and the digital white level signal represents a white level of "W," the calculation circuit carries out the following calculation to make the level data memory provide a digital white level signal representing a new white level of "W'":

$$W' = W \times (v - a) / (1 - a)$$

$$a = A \times 1 / [W \times (1 - A) + A]$$

where A is a correction value. According to the result of the calculation, the calculation circuit provides a new white level instructing digital signal.

Reference is made, by way of example, to the accompanying drawings in which:-

Fig. 1 is a schematic view showing essential parts of a white level setting system according to the present invention;
Fig. 2 is a schematic view showing essential parts of a standard image scanner;
Fig. 3 is a schematic view showing a white level setting system according to an embodiment of the present invention;
Figs. 4(a) and 4(b) explain a principle of a calculation circuit shown in Fig. 3; and
Fig. 5 is a schematic view showing essential parts of a white level setting system according to a prior art.

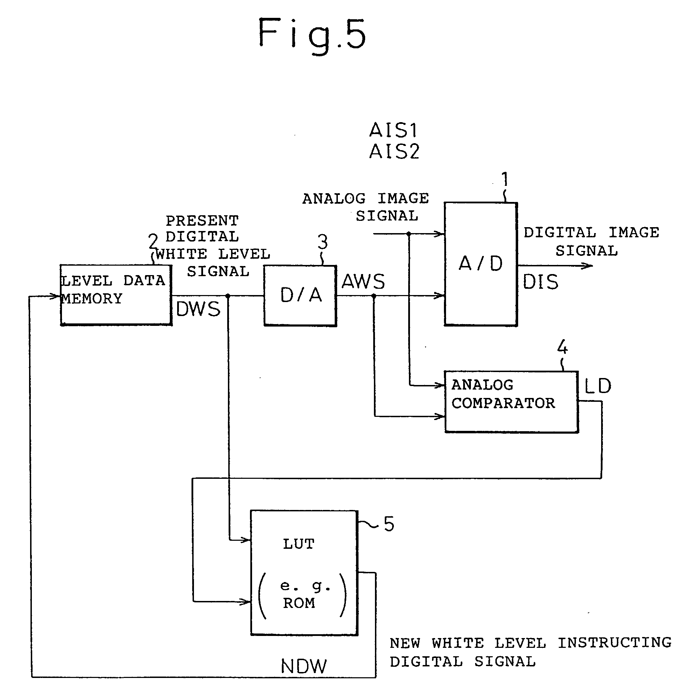

Before explaining a white level setting system according to an embodiment of the present invention, a white level setting system according to a prior art and the problems thereof will be explained with reference to Fig. 5.

The figure schematically shows essential parts of the conventional white level setting system. Numeral 1 is an analog-to-digital converter, 2 is a level data memory, 3 is a digital-to-analog converter, 4 is an analog comparator, and 5 is a look-up table made of, for example, a ROM.

The analog-to-digital converter 1 receives a first input signal, i.e., an analog image signal (a first analog image signal AIS 1) provided by scanning a white reference (not shown) or an analog image signal (a second analog image signal AIS 2) provided by scanning an original, and a second input signal, i.e., an analog white level signal AWS representing a presently required white level. According to the analog white level signal AWS representing a gray level of 1, the analog-to-digital converter 1 determines a gray level corresponding to the first or second analog image signal, and according to the determined gray level, generates a digital image signal DIS for a scanned pixel.

The level data memory 2 receives a new white level instructing digital signal NDW. The digital-to-analog converter 3 converts a digital white level signal DWS into the analog white level signal AWS.

The analog comparator 4 compares the analog image signal AIS 1 or AIS 2 with the analog white level signal AWS and provides a level difference signal LD according to a difference between the levels of the signals AIS 1 or AIS 2 and AWS.

The look-up table 5 prepares the new digital white level signal NDW according to the digital white level signal DWS and level difference signal LD. For example, the look-up table 5 adds a white level represented by the digital white level signal DWS to a level difference represented by the level difference signal LD and generates the new white level instructing digital signal NDW, which is supplied to the level data memory 2.

According to the prior art of Fig. 5, the analog comparator 4 provides the level difference signal LD at the start of reading (at the leading edge of an original), or when the ground color of the original is changed. This prior art involves a delay of several scan lines until providing the analog white level signal AWS representing a white level that correctly corresponds to the ground color of the original.

When the analog white level signal AWS correctly represents the gray level of the ground color of the original, the level difference signal LD is zero. If the ground color is changed, the new white level instructing digital signal NDW is supplied to the level data memory 2 in response to the change in the ground color. In spite of this, the digital white level signal DWS from the level data memory 2 does not follow the changed gray level of the ground color at once. Only after several scan lines, does the digital white level signal DWS come to represent the required gray level of the ground color.

The white level setting system according to the present invention follows a change in the gray level of a ground color only with a delay of a single scan line.

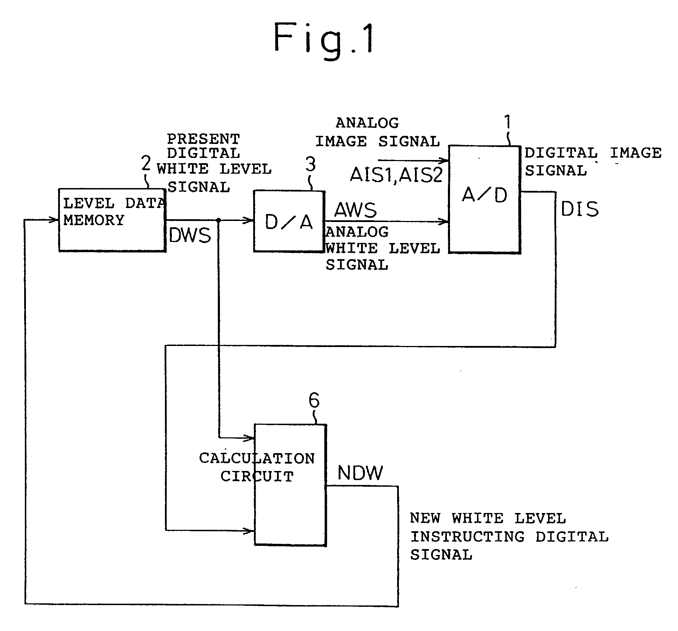

Figure 1 shows a principle of the present invention. In the figure, numeral 1 is an analog-to-digital converter. According to an analog white level signal AWS representing a white level of 1, the converter 1 converts an analog image signal AIS 1 or AIS 2 into a gray level for a corresponding pixel in a scanned line.

Numeral 2 is a level data memory for generating a required digital white level signal DWS in response to a new white level instructing digital signal NDW. Numeral 3 is a digital-to-analog converter for converting the digital white level signal DWS into the analog white level signal AWS.

Numeral 6 is a calculation circuit according to the present invention. According to a white level represented by the digital white level signal DWS and a gray level represented by a digital image signal DIS (prepared from a signal obtained by scanning a white reference, or from a signal obtained by scanning the ground color of an original), the calculation circuit 6 generates the new white level instructing digital signal NDW to make the level data memory 2 provide for the next scan line an analog white level signal representing a required white level.

When the ground color of the original is unchanged, the calculation circuit 6 causes the level data memory 2 to continuously provide the present digital white level signal DWS.

When the ground color of the original is changed, the analog white level signal AWS provides the next scan line with a white level corresponding to the changed ground color of the original. Namely, the calculation circuit 6 calculates a white level corresponding to the ground color of the original and generates the new white level instructing digital signal NDW so that the digital white level signal DWS may represent, for the next scan line, the correct white level.

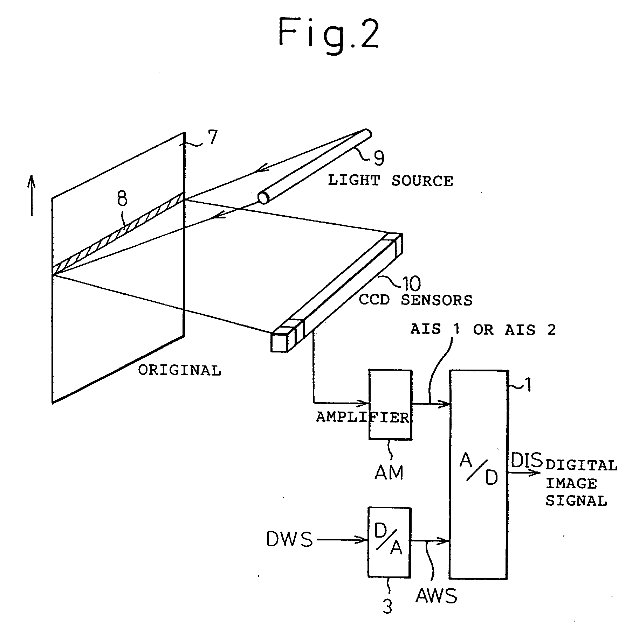

Figure 2 is a schematic view showing essential parts of an image scanner. In the figure, reference numerals 1 and 3 correspond to those of Fig. 1. Numeral 7 is an original, 8 is a scan line, 9 is a light source such as a fluorescent lamp, 10 is an array of CCD sensors for sensing reflected light from pixels in the scan line 8, and AM is an amplifier.

The light source 9 and sensors 10 share a base. The original 7 is fed in the direction of an arrow mark, and the sensors 10 raster-scan images recorded on the original 7. Each of the sensors 10 provides the amplifier AM with a signal representing a corresponding pixel in the scan line. The amplifier AM provides an output AIS 1 or AIS 2, which is supplied to the analog-to-digital converter 1 explained for Fig. 1.

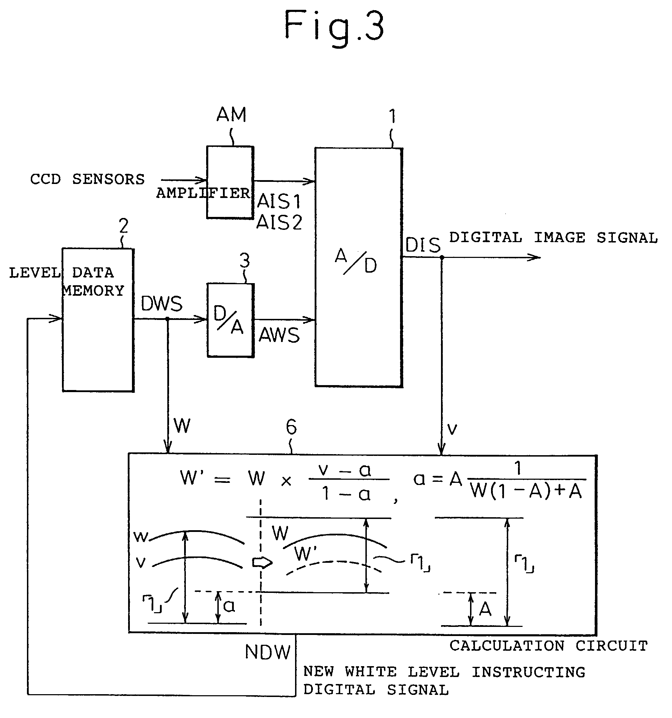

Figure 3 is a schematic view showing a white level setting system according to an embodiment of the present invention. In Fig. 3, the same reference numerals as those shown in Figs. 1 and 2 represent like parts, and therefore, the detailed explanations of the parts are not repeated. A digital image signal DIS representing a pixel in a scan line on a white reference or on the ground color of an original has a gray level (a white level) of v. At this time, a digital white level signal DWS provided for the pixel has a white level of W (w). There will be a difference between the levels v and W.

Theoretically, the level v of the pixel must be determined according to a required white level W' (w') for the corresponding scan line on the white reference or on the ground color of the original. Accordingly, the calculation circuit 6 according to the present invention carries out the following calculations:

$$W' = W \times (v - a) / (1 - a)$$

$$a = A \times 1 / [W \times (1 - A) + A] \qquad (1)$$

where A is a correction value for correcting a difference in the dynamic ranges of the analog-to-digital converter 1 and digital-to-analog converter 3. The gray level (white level) v of a pixel at a corresponding position in the next scan line is determined according to the white level W' represented with a new digital white level signal.

According to the prior art of Fig. 5, the white level W' is obtained after several scan lines. On the other hand, the present invention provides the white level W' only after one scan line.

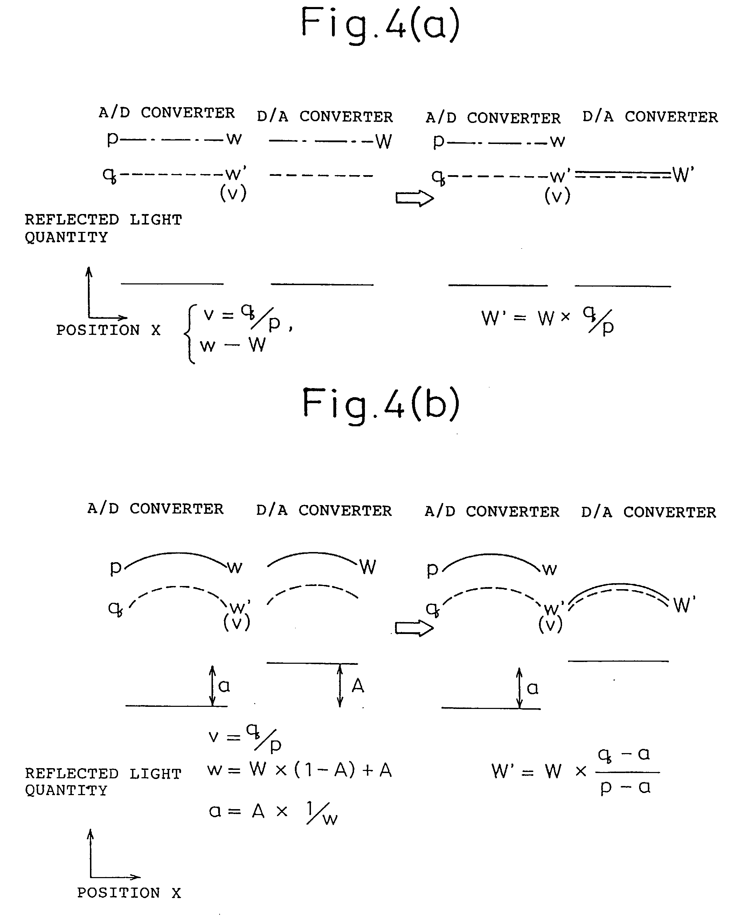

Figures 4(a) and 4(b) explain the basis of the expression (1).

In the figure, an abscissa represents pixel positions x in a scan line, and an ordinate represents reflected light quantities.

The left side of Fig. 4(a) shows a white level w (=p) provided by the level data memory 2 for the scan line. At this time, the reflected light quantity from a corresponding pixel after scanning a white reference or the ground color of an original is q. The right side of Fig. 4 (a) shows that a white level for the next scan line must be w' (=q).

In Fig. 4(a), the level W shown in Fig. 3 is as follows:

$$W = p = w$$

The level v shown in Fig. 3 is as follows:

$$v = q / p = w'$$

where the level v is based on the fact that the level w represents a pure white level.

Accordingly, the white level W' to be set for the next scan line is as follows:

$$W' = p \times q / p = q = w \times v = W \times v$$

The calculation circuit 6 theoretically carries out the calculations mentioned above, to obtain the new white level W'.

In practice, however, central pixels in the scan line 8 provide larger reflected light quantities because the light source 9 shown in Fig. 2 is linear and because the gray levels of the periphery of the original 7 are lower than those of the ground color of the original. Accordingly, the larger reflected light quantities from the central pixels provide a curve with a swelled central part as shown in the left side of Fig. 4(b). (The swelled part is exaggerated in the figure.)

Generally, the dynamic range of the analog-to-digital converter 1 of Fig. 3 differs from that of the digital-to-analog converter 3 of Fig. 3. Accordingly, it is necessary to employ the correction value A when converting signals shown in the left side of Fig. 4(b) into those shown in the right side of the same figure. The required white level W', therefore, is expressed as follows:

$$W' = W \times (v - a) / (1 - a)$$

$$a = A \times 1 / \{W \times (1 - A) + A\}$$

After these calculations, the calculation circuit 6 provides the level data memory 2 with a new white level instructing digital signal NDW for a corresponding pixel position in a scan line, and accordingly, the level data memory 2 provides a digital white level signal DWS for the pixel position. Since it is known that reflected light quantities at a central part of a scan line curve as shown in Fig. 4(b), the level data memory 2 may store digital white level signals DWS beforehand, to compensate the curve. In this case, the calculation circuit 6 calculates an average white level W' for a given scan line, and according to the calculation, provides a new white level instructing digital signal NDW only once for the given scan line.

As explained above, the white level setting system according to the present invention correctly provides a required white level W' after a single scan line. Namely, this system is capable of guaranteeing the quality of images except for a first scan line.

## Claims

1. A white level setting system for an image scanner for scanning an original (7) and reading characters and images recorded on the original, comprising:

    an analog-to-digital converter (1) for receiving a first analog image signal (AIS 1) obtained by scanning a predetermined white reference, or a second analog image signal (AIS 2) obtained by scanning the original, and an analog white level signal (AWS) representing a presently required white level, and providing a digital image signal (DIS) representing the gray level of the first or second analog image signal (AIS 1, AIS 2) according to the analog white level signal (AWS) serving as a white level of 1; a level data memory (2) for providing a digital white level signal (DWS) representing a required white level in response to a new white level instructing digital signal (NWD); a digital-to-analog converter (3) for converting the digital white level signal (DWS) representing the required white level provided by the level data memory (2) into an analog white level signal representing the required white level;

characterised by:

a calculation circuit (6) for receiving the digital image signal (DIS) representing the first analog image signal (AIS1) or the second analog image signal (AIS2) from the analog-to-digital converter (1) and the digital white level signal (DWS) from the level data memory (2), and providing the new white level instructing digital signal (NDW) to the level data memory (2) so as to make the white level represented by the digital white level signal (DWS) from the level data memory (2) coincide with the white level represented by the digital image signal (DIS) when there is a difference between the white levels, thereby easily setting a white level in response to a change in the gray level of the ground color of the original.

2. The white level setting system for an image scanner according to claim 1, wherein, when the white level represented with the digital image signal (DIS) is "v" and the white level represented with the digital white level signal (DWS) is "W," the calculation circuit (6) carries out the following calculation to make the level data memory (2) provide the digital white level signal (DWS) representing a new white level W':

$$W' = W \times (v - a) / (1 - a)$$

$$a = A \times 1 / [W \times (1 - A) + A]$$

where A is a correction value, and according to a result of the calculation, the calculation circuit (6) provides a new white level instructing digital signal (NDS).

**Patentansprüche**

1. Weißpegel-Einstellsystem für einen Bildscanner zum Abtasten eines Originals (7) und zum Lesen auf dem Original aufgezeichneten Zeichen und Bildern, enthaltend:

einen Analog/Digital-Umsetzer (1) zum Empfangen eines ersten durch Abtasten einer vorgegebenen Weißreferenz erhaltenen analogen Bildsignals (AIS 1) oder eines zweiten durch Abtasten der Originals erhalten analogen Bildsignals (AIS 2) und eines analogen Weißpegelsignals (AWS) zum Darstellen eines momentan erforderlichen Weißpegels, und ferner zum Bereitstellen eines digitalen Bildsignals (DIS) zum Darstellen des Graupegels des ersten oder zweiten analogen Bildsignals (AIS 1, AIS 2) gemäß dem analogen Weißpegelsignal (AWS), das als Weißpegel mit Wert 1 dient;

einen Pegeldatenspeicher (2) zum Bereitstellen eines digitalen Weißpegelsignals (DWS) zum Darstellen eines erforderlichen Weißpegels in Ansprechen auf ein digitales Befehlssignal für einen neuen Weißpegel (NDW);

einen Digital/Analog-Umsetzer (3) zum Umsetzen des digitalen Weißpegelsignals (DWS) zum Darstellen des durch den Pegeldatenspeicher (2) bereitgestellten erforderlichen Weißpegels in der Form eines analogen Weißpegelsignals zum Darstellen des erforderlichen Weißpegels;

gekennzeichnet durch

eine Berechnungsschaltung (6) zum Empfangen des digitalen Bildsignals (DIS) zum Darstellen des ersten analogen Bildsignals (AIS 1) oder des zweiten analogen Bildsignals (AIS 2) von dem Analog/Digital-Umsetzer (1) und des digitalen Weißpegelsignals (DWS) von dem Pegeldatenspeicher (2), und ferner zum Bereitstellen des digitalen Befehlssignals für den neuen Weißpegel (NDW) an den Pegeldatenspeicher (2) derart, daß bei Vorliegen einer Differenz zwischen den Weißpegeln eine Übereinstimmung des durch das digitale Weißpegelsignal (DWS) von dem Pegeldatenspeicher (2) dargestellten Weißpegels mit dem durch das digitale Bildsignal dargestellten Weißpegel erzielt wird, wodurch sich ein Weißpegel in Ansprechen auf eine Änderung des Graupegels der Grundfarbe des Originals einfach ändern läßt.

2. Weißpegel-Einstellsystem für einen Bildscanner nach Anspruch 1, dadurch gekennzeichnet, daß dann, wenn der durch das digitale Bildsignal (DIS) dargestellte Weißpegel einen Wert von "v" aufweist und der durch das digitale Weißpegelsignal (DWS) dargestellte Weißpegel einen Wert von "W" aufweist, die Berechnungsschaltung (6) die folgende Berechnung durchführt, damit der Pegeldatenspeicher (2) das digitale Weißpegelsignal (DWS) zum Darstellen eines neuen Weißpegels W' bereitstellt:

$$W' = W \times (v - a) / (1 - a)$$

$$a = A \times 1 / [W \times (1 - A) + A],$$

derart, daß A einen Korrekturwert darstellt, und daß gemäß einem Berechnungsergebnis die Berechnungsschaltung (6) das digitale Befehlssignal für einen neuen Weißpegel (NDS) bereitstellt.

## Revendications

1. Système de détermination de niveau de blanc pour un scanner d'image pour balayer un original (7) et lire les caractères et les images enregistrés sur l'original, comprenant :

   un convertisseur analogique-numérique (1) pour recevoir un premier signal d'image analogique (AIS 1) obtenu en balayant une référence de blanc prédéterminée, ou un second signal d'image analogique (AIS 2) obtenu en balayant l'original, et un signal de niveau de blanc analogique (AWS) représentant un niveau de blanc actuellement requis, et pour fournir un signal d'image numérique (DIS) représentant le niveau de gris du premier ou du second signal d'image analogique (AIS 1, AIS 2) conformément au signal de niveau de blanc analogique (AWS) servant de niveau de blanc de 1 ;
   une mémoire de données de niveau (2) pour fournir un signal de niveau de blanc numérique (DWS) représentant un niveau de blanc requis en réponse à un nouveau signal numérique d'instruction de niveau de blanc (NWD) ;
   un convertisseur numérique-analogique (3) pour convertir le signal de niveau de blanc numérique (DWS) représentant le niveau de blanc requis fourni par la mémoire de données de niveau (2) en un signal de niveau de blanc analogique représentant le niveau de blanc requis ;

   caractérisé par :

   un circuit de calcul (6) pour recevoir le signal d'image numérique (DIS) représentant le premier signal d'image analogique (AIS 1) ou le second signal d'image analogique (AIS 2) provenant du convertisseur analogique-numérique (1) et le signal de niveau de blanc numérique (DWS) provenant de la mémoire de données de niveau (2), et pour fournir le nouveau signal numérique d'instruction de niveau de blanc (NDW) à la mémoire de données de niveau (2) afin de faire coïncider le niveau de blanc représenté par le signal de niveau de blanc numérique (DWS) provenant de la mémoire de données de niveau (2) avec le niveau de blanc représenté par le signal d'image numérique (DIS) lorsqu'il y a une différence entre les niveaux de blanc, de ce fait, déterminant facilement un niveau de blanc en réponse à un changement du niveau de gris de la couleur de base de l'original.

2. Système de détermination de niveau de blanc pour un scanner d'image selon la revendication 1, dans lequel, lorsque le niveau de blanc représenté par le signal d'image numérique (DIS) est "v" et que le niveau de blanc représenté par le signal de niveau de blanc numérique (DWS) est "W", le circuit de calcul (6) exécute le calcul suivant pour amener la mémoire de données de niveau (2) à fournir le signal de niveau de blanc numérique (DWS) représentant un nouveau niveau de blanc W' :

$$W' = W \times (v - a) / (1 - a)$$

$$a = A \times 1 / [W \times (1 - A) + A]$$

où A est une valeur de correction et, en fonction d'un résultat du calcul, le circuit de calcul (6) fournit un nouveau signal numérique d'instruction de niveau de blanc (NDS).

# Fig.1

ANALOG
IMAGE SIGNAL

PRESENT
DIGITAL
WHITE LEVEL
SIGNAL

AIS1,AIS2

DIGITAL IMAGE
SIGNAL

LEVEL DATA
MEMORY

D∕A

A∕D

DWS

AWS
ANALOG
WHITE LEVEL
SIGNAL

DIS

CALCULATION
CIRCUIT

NDW

NEW WHITE LEVEL
INSTRUCTING DIGITAL
SIGNAL

# Fig.2

LIGHT SOURCE

ORIGINAL

CCD SENSORS

AIS 1 OR AIS 2

AMPLIFIER

AM

A/D

DIS DIGITAL IMAGE SIGNAL

DWS

D/A

AWS

# Fig.3

AM

CCD SENSORS → AMPLIFIER → AIS1 AIS2 → 1

2

LEVEL DATA MEMORY → DWS → 3 D/A → AWS → A/D → DIS → DIGITAL IMAGE SIGNAL

$$W' = W \times \frac{v - a}{1 - a}, \quad a = A \frac{1}{W(1 - A) + A}$$

W

6

v

NDW

CALCULATION CIRCUIT

NEW WHITE LEVEL INSTRUCTING DIGITAL SIGNAL

# Fig.4(a)

A/D CONVERTER  D/A CONVERTER  A/D CONVERTER  D/A CONVERTER

REFLECTED LIGHT
QUANTITY

POSITION X
$$\begin{cases} v = \dfrac{q}{p}, \\ w - W \end{cases}$$

$$W' = W \times \dfrac{q}{p}$$

# Fig.4(b)

A/D CONVERTER  D/A CONVERTER  A/D CONVERTER  D/A CONVERTER

$$v = \dfrac{q}{p}$$

REFLECTED LIGHT  $w = W \times (1 - A) + A$
QUANTITY

$$a = A \times \dfrac{1}{w}$$

$$W' = W \times \dfrac{q - a}{p - a}$$

POSITION X

10

# Fig.5